# EUROPEAN PATENT SPECIFICATION

(11) **EP 2 476 319 B1**
(45) Date of publication and mention of the grant of the patent: **24.07.2013**
(21) Application number: 11150860.2
(22) Date of filing: 13.01.2011
(51) Int. Cl.: A23G 1/18, A23G 3/02

(54) **Tempering machine**
Temperiermaschine
Machine pour le conditionnement thermique

(43) Date of publication of application: 18.07.2012
(73) Proprietor: Selmi S.r.l., 12069 Santa Vittoria d'Alba (Cuneo) (IT)
(72) Inventor: Selmi, Renato, 12069 Santa Vittoria d'Alba (Cuneo) (IT); Selmi, Paolo, 12069 Santa Vittoria d'Alba (Cuneo) (IT)
(74) Representative: Frontoni, Stefano

(56) References cited:
- WO-A1-2006/049644
- DE-A1- 2 602 877
- GB-A- 700 205
- GB-A- 826 502
- GB-A- 917 212
- GB-A- 945 030

## Description

The subject of the present invention is a tempering machine of the type comprising:
- a tank, set within which is a stirring means rotatably mounted within the tank and governed in rotation by first actuator means;
- a duct, which extends upwards, preferably in a vertical direction, in fluid communication with said tank and is designed to receive at its bottom end chocolate coming from said tank, there being rotatably mounted within said duct a worm conveyor element, governed in rotation by second actuator means and designed to convey the chocolate along said duct up to a delivery mouth provided on the top part of said duct.

Such a device is known from e.g. GB-826 502 and from DE 2602877.

In a tempering machine of this sort, between complete discharge of the tempered chocolate of a first processing cycle and charging of new chocolate for a new processing cycle, it is necessary to carry out an operation of washing both of the tank and of the duct referred to above, as well as of the conveyor element contained therein. In a conventional way, washing of the duct and of the conveyor element is carried out by simply flushing them with a cleaning liquid that is introduced through valves purposely provided on the machine and that traverses the aforesaid duct. It should be noted, in fact, that in conventional tempering machines the duct and the conveyor element are difficult to reach from outside and only after several parts of the machine have been removed according to operations of assembly and disassembly that require excessively long times, which are not justifiable in the context of an industrial process.

The object of the present invention is to provide a tempering machine that will enable, instead, ease and rapidity of accessibility to the inside of the duct in question so that it is possible to remove in an equally simple and fast way the conveyor element from inside it. Thanks to said characteristics, whenever washing of the tempering machine described herein is carried out, it is possible to extract the conveyor element in order to guarantee optimal cleaning of the machine itself.

The above object is achieved via a tempering machine having the characteristics of Claim 1.

Preferred characteristics of the invention will likewise be illustrated in the dependent claims.

The claims form an integral part of the technical teaching provided herein in relation to the invention.

The invention will now be described with reference to the attached drawings, which are provided purely by way of non-limiting example and in which:
- Figure 1 is a partially sectioned schematic side view of the tempering machine described herein; and
- Figure 2 is a front view of the machine of Figure 1.

Illustrated in the ensuing description are the various specific details aimed at an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are only for convenience and hence do not define the sphere of protection or the scope of the embodiments.

Designated as a whole by the reference number 20 is a machine for tempering chocolate. Said machine comprises a tank 1, set within which is a stirring means 2 rotatably mounted within the tank 1 and governed by first actuator means, for example an electric motor 12.

Associated to the tank 1 there are moreover provided heating means designed to heat the chocolate poured into the tank. Said means are not illustrated in the figures and will not be described herein in detail in order not to overload the present description. Said means can in any case be of any conventional type used in the technical field in question and be associated to the tank 1 in any appropriate way known to persons skilled in the branch so that said means may be able to perform their function.

The tempering machine further comprises a duct 3, which is substantially vertical or in any case extends upwards and is in fluid communication with the tank 1 and is designed to receive at its bottom end chocolate coming from the tank 1. In particular, with reference to the annexed drawings, present at the bottom of the tank 1 is an opening 1a that gives out into a pipe 6, which in turn terminates at the opening 3a provided on the bottom end of the duct 3, thus setting the tank 1 in fluid communication with the duct 3 itself.

In various embodiments, associated to the duct 3 are means for cooling the chocolate that passes through said duct. Said means are not illustrated in the figures and will not be described herein in detail so as not to overload the present description. Said means can in any case be of any conventional type used in the technical field in question and be associated to the duct 3 in any appropriate way known to the person skilled in the branch so that said means will be able to perform their function.

Rotatably mounted within the duct 3 is a worm conveyor element 8, which is governed in rotation by second actuator means, for example a second electric motor 12', which are mounted at the top of the duct 3. The conveyor element 8 is designed to convey the chocolate along the duct 3 up to a delivery mouth 14 provided on the top part of the duct itself.

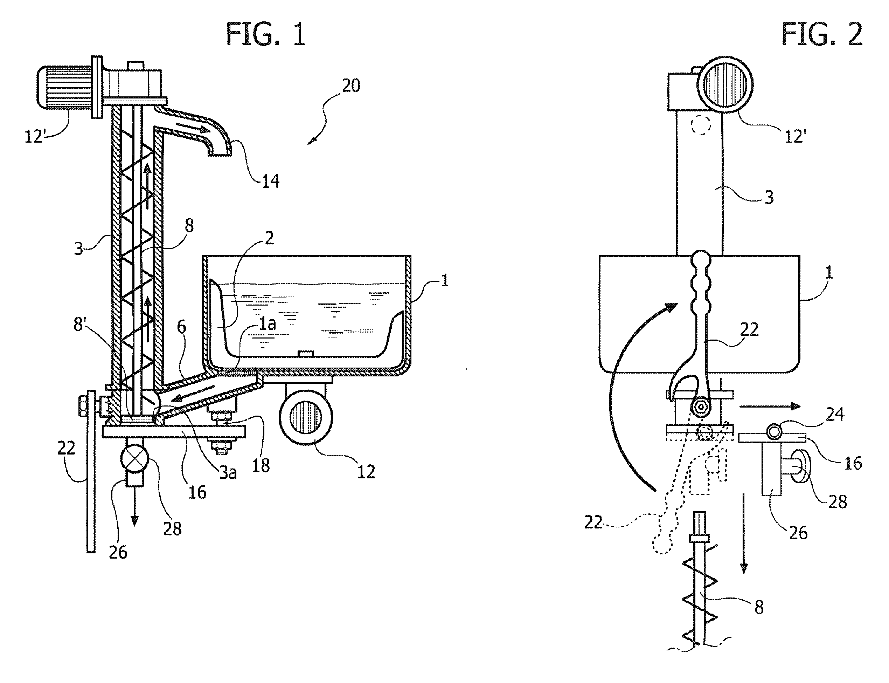

Purposely provided in the tempering machine described herein are means for mounting and removal of the conveyor element 8, which can be activated between a first condition (illustrated in Figure 1) where the conveyor element 8 is rotatably mounted within the duct 3, and a second condition, where removal of the conveyor element 8 through the bottom end of said duct (see Figure 2) is enabled.

In various embodiments, as in the one illustrated in the figures, said means comprise a plate 16 designed to define the bottom of the duct 4, which can be displaced between a position in which it closes the duct 3 (Figure 1) at the bottom and a position in which it opens said duct (Figure 2).

In various embodiments, as in the one illustrated, the plate 16 is mounted pivoting in a plane substantially orthogonal to the duct 3, between the opening and closing positions referred to above. In particular, with reference to Figure 2, the plate 16 is hinged to a pin 18 that projects at the bottom from the pipe 6.

In order to fix the plate 16 in the closing position, mounted pivoting on an outer portion of the duct 3 is a lever 22, which can be manoeuvred manually between a raised, opening, position (Figure 2) and a lowered, gripping, position (Figure 1), and is designed to engage, in the aforesaid lowered position, a pin 24 carried by the plate 16 so as to grip the latter in its position for closing the duct.

As may be seen in Figure 2, when the lever 22 is brought into the raised position, the pin 24 is disengaged therefrom and the plate 16 can be displaced into a position in which the bottom end of the duct 3 is open and the conveyor element 8 can be extracted.

In various embodiments, the conveyor element 8 is connected in rotation to the second actuator means at its top end via a mobile fit, for example a shape fit.

In various preferred embodiments, as in the one illustrated, the plate 16 is designed to support the conveyor element 8 in such a way that it can turn. In a preferred way, the bottom end of said element comprises a sliding pad 8' that rests on the plate 16 when this is in its closing position (Figure 1).

In various preferred embodiments, as in the one illustrated, the plate 16 has, at its part designed to constitute the bottom of the duct, a tubular portion 26, which is in fluid communication with the top side of the plate and has a section of flow controlled by a shut-off valve 28. During the operations of washing of the machine, cleaning liquid can be introduced through the portion 26 within the duct 3. For example, said operations can first envisage removal of the conveyor element 8 from the duct 3 with the modalities described above and then introduction through said portion 26 of the cleaning liquid for flushing the duct itself, as well as the other parts connected thereto. The cleaning liquid can finally be evacuated from the portion 26 itself.

Operation of the machine described above corresponds to that of a machine of a conventional type. Specifically, the chocolate is poured into the tank 1, within which it is heated by the heater means provided therein and mixed by the stirring means 2. As the chocolate melts, a part of it, by flowing in the pipe 6, reaches the duct 3, where it is cooled while it is carried via the conveyor element 8 up to the delivery mouth 14. The chocolate comes out of the delivery mouth at the desired temperature, and can then be picked up in the desired amount for the further processes, whilst the amount in excess returns to the tank 1.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims. In particular, in the annexed figures, the duct 3 is defined by two distinct pieces, of which the first carries the delivery mouth 14, whilst the second carries the pipe 6, which sets the tank in fluid communication with the duct 3 itself. It is, however, clear that said duct may be made in any other form, for example of a single piece on which the pipe 6 itself is likewise provided. Furthermore, the term "chocolate", as used herein, refers preliminary to the rheological characteristics of the product treated and is in no wise to be understood, in any way limiting the scope of description, as referring to standards inherent in the attribution of said term according to the composition and the ingredients of the product.

## Claims

1. A tempering machine comprising:
- a tank (1), set within which is a stirring means (2) rotatably mounted within the tank and governed in rotation by first actuator means (12);
- a duct (3), which extends upwards, preferably in a vertical direction, in fluid communication with said tank and is designed to receive at its bottom end chocolate coming from said tank, there being rotatably mounted within said duct a worm conveyor element (8), governed in rotation by second actuator means (12') and designed to convey the chocolate along said duct up to a delivery mouth (14) provided on the top part of said duct;
said machine being **characterized in that**:
said second actuator means (12') are mounted at the top of said duct (3) and **in that** means (16, 22, 24) are provided for mounting and removal of said conveyor element, which can be activated between a first condition, in which said conveyor element is rotatably mounted in said duct (3), and a second condition, in which removal of the conveyor element through the bottom end of said duct is enabled.

2. The machine according to Claim 1, wherein said means for mounting and removal comprise a plate (16) designed to define the bottom of said duct, which is mounted mobile between a first position in which it closes said duct at the bottom, and a second position in which it opens said duct rendering inside thereof accessible.

3. The machine according to Claim 2, wherein said plate is mounted pivoting in a plane substantially orthogonal to said duct, between said opening and closing positions.

4. The machine according to Claim 3, wherein provided on an outer portion of said duct (3) is a pivoting lever (22) designed to be manoeuvred by a user between a first position in which it engages a pin (24) carried by said plate so as to grip said plate in said closing position, and a second position in which it disengages said pin, and said plate can be brought into its second position of opening of said duct.

5. The machine according to any one of Claims 2 to 4, wherein said plate is designed to support said conveyor element rotatably.

6. The machine according to Claim 5, wherein a bottom end of said conveyor element comprises a sliding pad (8') designed to rest on said plate in said closing position.

7. The machine according to any one of the preceding claims, comprising heating means associated to said tank and designed to heat the chocolate poured therein.

8. The machine according to any one of the preceding claims, comprising cooling means associated to said duct and designed to cool the chocolate that passes through said duct.

## Patentansprüche

1. Temperiermaschine, umfassend:
- einen Tank (1), in dem eine Rühreinrichtung (2) angeordnet ist, die in dem Tank drehbar angebracht ist und von ersten Betätigungseinrichtungen (12) gedreht wird;
- eine Leitung (3) die sich nach oben vorzugsweise in vertikaler Richtung erstreckt und mit dem Tank in Fluidverbindung steht und dazu eingerichtet ist, an ihrem unteren Ende Schokolade aufzunehmen, die aus dem Tank kommt, wobei in der Leitung ein Schraubenförderelement (8) drehbar angebracht ist, das von zweiten Betätigungseinrichtungen (12') gedreht wird und dazu eingerichtet ist, die Schokolade entlang der Leitung nach oben zu der Ausgabemündung (14) zu fördern, die am oberen Teil der Leitung vorgesehen ist;
wobei die Maschine **dadurch gekennzeichnet ist, dass**:
die zweiten Betätigungsreinrichtungen (12') an der Oberseite der Leitung (3) angebracht sind, und dass Einrichtungen (16, 22, 24) vorgesehen sind, um das Förderelement anzubringen und zu entnehmen, das zwischen einem ersten Zustand, in dem das Förderelement drehbar in der Leitung (3) angebracht ist, und einem zweiten Zustand aktiviert werden kann, in dem die Entnahme des Förderelementes durch das untere Ende der Leitung ermöglicht ist.

2. Maschine nach Anspruch 1, bei der die Einrichtungen zum Anbringen und Entnehmen eine Platte (16) umfassen, die dazu bestimmt ist, die Unterseite der Leitung zu bilden, die zwischen einer ersten Stellung, in der sie die Leitung schließt, und einer zweiten Stellung beweglich angebracht ist, in der sie die Leitung öffnet, um einen Zugang zu ihrem Inneren zu ermöglichen.

3. Maschine nach Anspruch 2, bei der die Platte in einer Ebene, die im wesentlichen orthogonal zu der Leitung ist, schwenkbar zwischen der Öffnungs- und der Verschlussstellung angebracht ist.

4. Maschine nach Anspruch 3, bei der auf dem Außenabschnitt der Leitung (3) ein Schwenkhebel (22) angebracht ist, der dazu bestimmt ist, von einem Benutzer zwischen einer ersten Stellung, in der er mit einem Zapfen (24) in Eingriff steht, der von der Platte gehalten ist, um so die Platte in der Verschlussstellung zu greifen, und einer zweiten Stellung betätigt zu werden, in der er den Stift freigibt und in der die Platte in ihre zweite Stellung des Öffnens der Leitung gebracht werden kann.

5. Maschine nach einem der Ansprüche 2 bis 4, bei der die Platte dazu eingerichtet ist, das Förderelement drehbar zu lagern.

6. Maschine nach Anspruch 5, bei der ein unteres Ende des Förderelementes eine Gleitauflage (8') umfasst, die dazu bestimmt ist, auf der Platte in der Schließstellung zu ruhen.

7. Maschine nach einem der vorhergehenden Ansprüche, umfassend eine Heizeinrichtung, die mit dem Tank assozüert und dazu bestimmt ist, die Schokolade zu erwärmen, die in diesen geschüttet wird.

8. Maschine nach einem der vorhergehenden Ansprüche, umfassend eine Kühleinrichtung, die mit der Leitung assozüert und dazu bestimmt ist, die Schokolade zu kühlen, die durch die Leitung verläuft.

## Revendications

1. Machine pour le conditionnement thermique comprenant :
- un réservoir (1) à l'intérieur duquel on trouve des moyens d'agitation (2) montés de manière rotative à l'intérieur du réservoir et commandés en rotation par des premiers moyens d'actionneur (12) ;
- un conduit (3) qui s'étend vers le haut, de préférence dans une direction verticale, en communication de fluide avec ledit réservoir et est conçu pour recevoir au niveau de son extrémité inférieure, du chocolat provenant dudit réservoir, monté en rotation à l'intérieur dudit conduit, on trouve un élément transporteur à vis sans fin (8) commandé en rotation par des seconds moyens d'actionneur (12') et conçu pour transporter le chocolat le long dudit conduit jusqu'à une bouche de distribution (14) prévue sur la partie supérieure dudit conduit ;
ladite machine étant **caractérisée en ce que** :
lesdits seconds moyens d'actionneur (12') sont montés au niveau de la partie supérieure dudit conduit (3) et **en ce que** des moyens (16, 22, 24) sont prévus pour le montage et le retrait dudit élément transporteur qui peut être activé entre une première condition dans laquelle ledit élément transporteur est monté en rotation dans ledit conduit (3) et une seconde condition dans laquelle le retrait de l'élément transporteur, par l'extrémité inférieure dudit conduit, est autorisé.

2. Machine selon la revendication 1, dans laquelle lesdits moyens pour le montage et le retrait comprennent une plaque (16) conçue pour définir le fond dudit conduit qui est montée de manière mobile entre une première position dans laquelle elle ferme ledit conduit au niveau du fond, et une seconde position dans laquelle elle ouvre ledit conduit, rendant son intérieur accessible.

3. Machine selon la revendication 2, dans laquelle ladite plaque est montée de manière pivotante dans un plan sensiblement orthogonal audit conduit, entre lesdites positions d'ouverture et de fermeture.

4. Machine selon la revendication 3, dans laquelle on prévoit, sur une partie externe dudit conduit (3), un levier pivotant (22) conçu pour être manoeuvré par un utilisateur entre une première position dans laquelle il met en prise une broche (24) portée par ladite plaque afin de saisir ladite plaque dans ladite position de fermeture, et une seconde position dans laquelle il dégage ladite broche, et ladite plaque peut être amenée dans sa seconde position d'ouverture dudit conduit.

5. Machine selon l'une quelconque des revendications 2 à 4, dans laquelle ladite plaque est conçue pour supporter ledit élément transporteur en rotation.

6. Machine selon la revendication 5, dans laquelle une extrémité inférieure dudit élément transporteur comprend un coussinet coulissant (8') conçu pour reposer sur ladite plaque dans ladite position de fermeture.

7. Machine selon l'une quelconque des revendications précédentes, comprenant des moyens de chauffage associés audit réservoir et conçus pour chauffer le chocolat déversé à l'intérieur de ce dernier.

8. Machine selon l'une quelconque des revendications précédentes, comprenant des moyens de refroidissement associés audit conduit et conçus pour refroidir le chocolat qui passe par ledit conduit.
